# EUROPÄISCHE PATENTSCHRIFT

(11) **EP 1 194 201 B1**
(45) Veröffentlichungstag und Bekanntmachung des Hinweises auf die Patenterteilung: **20.08.2003**
(21) Anmeldenummer: 00945798.7
(22) Anmeldetag: 21.06.2000
(51) Int. Cl.: B01D 15/08

(54) **FASERVERSTÄRKTE KUNSTSTOFFROHRE FÜR DIE HPLC**
FIBER-REINFORCED PLASTIC TUBES FOR HPLC
TUBES EN MATIERE PLASTIQUE RENFORCEE PAR FIBRES POUR LA CHROMATOGRAPHIE LIQUIDE HAUTE PRESSION (CLHP)

(30) Priorität: 10.07.1999 DE 19932318
(43) Veröffentlichungstag der Anmeldung: 10.04.2002
(73) Patentinhaber: MERCK PATENT GmbH, 64271 Darmstadt (DE)
(72) Erfinder: LUBDA, Dieter, D-64625 Bensheim (DE); SÄTTLER, Günther, D-64354 Reinheim (DE); NEUROTH, Willi, D-64380 Rossdorf (DE); HAUKE, Günter, D-64367 Mühltal (DE); CABRERA, Karin, D-63303 Dreieich (DE)
(86) Internationale Anmeldenummer: EP0005746
(87) Internationale Veröffentlichungsnummer: WO01003797

(56) Entgegenhaltungen:
- EP-A- 0 881 057
- DE-A- 3 432 806
- DE-A- 4 106 631
- FR-A- 2 654 835

## Beschreibung

Gegenstand der Erfindung sind druckstabile Chromatographierohre aus Kunststoff.

Für den Einsatz in der Hochdruckflüssigkeitschromatographie (HPLC) werden partikuläre Sorbentien in Rohre eingefüllt, die an den Enden mit Fritten abgeschlossen werden. Bei Verwendung für die HPLC müssen diese Rohre druckstabil sein. Insbesondere müssen Verformungen durch Druck so gering sein, daß das eingefüllte Sorbens stets dicht an der Rohrwandung anliegt. Weiterhin müssen diese Rohre gegenüber den Elutionsmitteln inert sein. Üblicherweise bestehen Rohre für die HPLC aus nichtrostenden Stählen. Auch Stahlrohre mit einer Innenauskleidung aus beständigen Kunststoffen oder Glasrohre sind bekannt. Eine neuere Entwicklung beschreibt die Ummantelung mit Rohren aus Polyetheretherketon (PEEK). Dieser Kunststoff zeichnet sich durch gute Beständigkeit gegenüber Lösungsmitteln aus und besitzt eine relativ gute Druckstabilität. Gerade für die Biochromatographie werden häufig wäßrige Puffersysteme oder Salzlösungen verwendet, von denen Metallrohre angegriffen werden, die Kunststoffrohre dagegen nicht. Außerdem können biologische Proben durch Metallionen verändert oder denaturiert werden oder es kommt zu einer Chelatbildung.

In den Dokumenten FR-A-2 654 835 und DE-A-41 06 631 werden Trennsäulen aus chemisch inerten Kunststoff wie PEEK beschrieben.

Für manche Anwendungen, besonders im Bereich der präparativen HPLC, ist jedoch die mechanische Stabilität und die Druckstabilität des PEEK Materials nicht ausreichend. Die Ummantelung hält den an sie gestellten Anforderungen nicht stand. Besonders bei längeren Belastungen sinkt deswegen die Trennleistung von PEEK-ummantelten Säulen. Ein weiteres Problem ist, daß beim Füllen der Säulen das Sorbens bevorzugt unter sehr hohem Druck eingefüllt wird. Dies ist bei PEEK Säulen nur bedingt möglich.

Ein weiteres Problem resultiert aus der Fähigkeit von PEEK, Wasser aufzunehmen und dabei zu quellen. Dadurch kann es zur Verfälschung der Analysenergebnisse bzw. zu einer Verbreiterung der Peaks kommen.

Aus diesem Grund war es Aufgabe der vorliegenden Erfindung, die Stabilität der ansonsten sehr vorteilhaften PEEK-Ummantelung zu verbessern und die Lösungsmittelaufnahme des Materials zu reduzieren.

Es wurde gefunden, daß der Zusatz von Fasern zu dem Kunststoff die mechanische Stabilität stark verbessert. Rohre aus faserverstärkten Kunststoffen weisen daher eine deutlich höhere Druckstabilität auf als nicht faserverstärkte Materialien.

Gegenstand der Erfindung sind daher Chromatographierohre aus Kunststoff zur Befüllung von partikulären Sorbentien, wobei der Kunststoff faserverstärkt ist.

Eine bevorzugte Ausführungsform sind Rohre aus einem Kunststoff, in den die Faserverstärkung direkt eingearbeitet ist.

Bevorzugte Ausführungsform der erfindungsgemäßen Chromatographierohre ist die Verwendung von PEEK mit Verstärkungen aus Glas- oder Kohlefasern.

Gegenstand der Erfindung sind auch Chromatographiesäulen, die im wesentlichen aus einem erfindungsgemäßen Rohr bestehen, das mit einem Sorbens befüllt ist und Anschlüsse für Zu- und Ablauf enthält.

Das erfindungsgemäße faserverstärkte Chromatographierohr kann mit jeder Art von partikulären Sorbentien gefüllt werden. Es kann sich beispielsweise um modifizierte Siliziumdioxid- oder Polymermaterialien handeln. Besonders bevorzugt ist der Einsatz in der Biochromatographie zur Trennung von z.B. Proteinen, Nukleinsäuren oder subzellulären Einheiten.

Die zur erfindungsgemäßen Faserverstärkung geeigneten Kunststoffe sind thermoplastische Polymere, wie z.B. Polyaryle, Polyetherketone, Polyester, aromatische Polyamide, Polyimide, Polybenzimidazole, bevorzugt Fluorpolymere, Polyphenylensulfide, Polyethersulfone oder Flüssigkristalline Polymere (LCP's) sowie Mischungen aus zwei oder mehreren dieser Materialien. Besonders bevorzugt werden Flüssigkristalline Polymere (LCP's), insbesondere PEEK (Polyetheretherketon) eingesetzt.

Zur erfindungsgemäßen Modifikation geeignete Fasern sind z.B. Kunststofffasern oder bevorzugt Kohle- und/oder Glasfasern. Weiterhin können Materialien wie anorganische Materialien (z.B. Oxide) oder Pigmente zugesetzt werden. Die bevorzugten Kohle- und/oder Glasfasern werden in einem Gewichtsanteil von 10-30 %, bevorzugt 15-30 % zugesetzt.

Die erfindungsgemäßen Rohre können aus Halbzeug mechanisch gefertigt werden, vorzugsweise jedoch extrudiert oder durch Spritzgießen hergestellt werden. Die Wandstärke der Rohre liegt typischerweise zwischen 1 und 15 mm, d.h. bevorzugt zwischen 1 und 3 mm für analytische Anwendungen und 10 bis 15 mm für präparative Anwendungen.

Die erfindungsgemäße Säule bietet neben der großen mechanischen und chemischen Stabilität zusätzlich den Vorteil einer sehr geringen Feuchtigkeitsaufnahme. Während beispielsweise nicht faserverstärktes PEEK-Material ca. 0,5 % Wasser aufnimmt, wird dies z.B. durch den Zusatz von 30 % Glasfaser auf 0,11 % und durch den Zusatz von 30% Kohlefaser auf 0,06 % reduziert.

Neben dem bevorzugten direkten Einbringen der Faserverstärkung in den Kunststoff, ist auch das nachträgliche Aufbringen der Verstärkung auf die Kunststoffsäule möglich. Dabei werden beispielsweise im Handel erhältliche herkömmliche PEEK-Säulen nachträglich mit den Fasern umwickelt. Die Dicke der Umwicklung beträgt typischerweise 0,1 bis 0,5 mm in Abhängigkeit von der Wandstärke. Die Wandstärke liegt typischerweise zwischen 1,5 und 3 mm, bei Rohren für präparative Anwendungen auch bei bis zu 15 mm. Diese Form der Verstärkung ist besonders für Chromatographiesäulen mit großem Durchmesser sinnvoll. Allerdings bleibt bei dieser Variante das Quellverhalten des Kunststoffes unverändert.

Die erfindungsgemäßen Chromatographierohre haben Dimensionen, die für die analytische oder präparative Flüssigkeitschromatographie üblich sind. Üblicherweise werden Rohre mit einer Länge von 3 bis 150 cm und einem Innendurchmesser zwischen 2 und 100 mm eingesetzt. Aber auch präparative Säulen mit einem Durchmesser von beispielsweise bis zu 500 mm können aus dem faserverstärkten Material hergestellt werden.

Die erfindungsgemäßen Chromatographierohre weisen an mindestens einem Ende ein Mittel auf, um das Sorbens zurückzuhalten. Dies ist beispielsweise ein Filterelement, eine Fritte, Säulenendstücke oder zumindestens Strukturelemente, wie Aussparungen, Gewinde oder Flanschen, die das Aufbringen eines Endstückes ermöglichen.

An den Enden der Rohre können zudem übliche Anschlußteile für Zu- und Ablauf sowie eventuell notwendige Dichtungen eingesetzt, angeschraubt, aufgeklebt oder auf andere Weise angebracht werden. Die Einzelteile der Anschlußteile bestehen aus den dafür üblichen Materialien, vorzugsweise aus Metall oder inerten Kunststoffmaterialien, wie Polyamiden, Polyvinylidenfluoriden, besonders bevorzugt aus PEEK oder faserverstärktem PEEK oder Metall. Die Form und Beschaffenheit der Anschlußteile und Dichtungen entspricht der für herkömmliche PEEK-Säulen verwendeten Form und ist dem Fachmann bekannt.

Zur Verwendung der erfindungsgemäßen Rohre als Chromatographiesäule werden sie mit Sorbens befüllt, am zweiten Ende verschlossen und mit den notwendigen Anschlußstücken versehen. Auf diese Weise können die erfindungsgemäß verstärkten Rohre für alle Säulen- oder Kartuschensysteme genutzt werden.

Die Druckfestigkeit der erfindungsgemäßen Säulen wird durch den Zusatz der Faseranteile, wie z.B. 30 % Kohlefasern, typischerweise um den Faktor 2 erhöht. Diese erhöhte Stabilität und mechanische Belastbarkeit ist sowohl beim Füllen der Säulen als auch für die chromatographische Trennung von Vorteil. Beim Füllen der Säulen kann unter höherem Druck ein dichter gepacktes Sorbensbett erreicht werden. Beim Einsatz als Chromatographiesäule wird über einen langen Zeitraum eine gleichbleibende Trennleistung erzielt.

## Patentansprüche

1. Chromatographierohr aus Kunststoff zur Befüllung mit partikulären Sorbentien, **dadurch gekennzeichnet, daß** der Kunststoff faserverstärkt ist.

2. Chromatographierohr nach Anspruch 1, **dadurch gekennzeichnet, daß** die Faserverstärkung in den Kunststoff eingearbeitet ist.

3. Chromatographierohr nach einem der Ansprüche 1 oder 2, **dadurch gekennzeichnet, daß** der Kunststoff PEEK ist und die Fasern Glas- oder Kohlefasern sind.

4. Verwendung eines Chromatographierohrs entsprechend einem der Ansprüche 1 bis 3, das mit einem partikulären Sorbens befüllt ist, als Chromatographiesäule.

## Claims

1. Chromatography tube in plastic for filling with particulate sorbents, **characterized in that** the plastic is fibre reinforced.

2. Chromatography tube according to Claim 1, **characterized in that** the fibre reinforcement is incorporated in the plastic.

3. Chromatography tube according to either of Claims 1 and 2, **characterized in that** the plastic is PEEK and the fibres are glass fibres or carbon fibres.

4. Use of a chromatography tube conforming to any one of Claims 1 to 3 and filled with a particulate sorbent, as a chromatography column.

## Revendications

1. Tube de chromatographie en matière plastique, destiné à être rempli par des sorbants particulaires, **caractérisé en ce que** la matière plastique est renforcée par des fibres.

2. Tube de chromatographie selon la revendication 1, **caractérisé en ce que** le renforcement par des fibres est incorporé dans la matière plastique.

3. Tube de chromatographie selon la revendication 1 ou 2, **caractérisé en ce que** la matière plastique est des PEEC et que les fibres sont des fibres de verre ou de carbone.

4. Utilisation d'un tube de chromatographie selon l'une des revendications 1 à 3, rempli par un sorbant particulaire, comme colonne chromatographique.
